# EUROPEAN PATENT APPLICATION

(11) **EP 1 614 666 A1**
(43) Date of publication of application: **11.01.2006**
(21) Application number: 05106116.6
(22) Date of filing: 06.07.2005
(51) Int. Cl.: C03C 17/34, F24C 15/10

(54) **Household appliance for kitchens and the like**

(30) Priority: 08.07.2004 IT MI20041363
(71) Applicant: Cedil S.A., 6901 Lugano (CH)
(72) Inventor: JELMINI, Paolo, 6963, PREGASSONA (CH)
(74) Representative: Coppo, Alessandro

(57) **Abstract**

A household appliance for kitchens and the like comprising a coating in ceramic laminate as a surface finish, as well as the use of a coating in a ceramic laminate material as at least a partial surface finish coating for a household appliance. In particular, as a surface finish coating for a household appliance, a coating in porcelain laminate grès is used.
The coating in ceramic laminate material is also used to design and realise kitchen furnishing and/or parts of kitchen units such as doors, backs, bench tops and auxiliary equipment, tables, doors, chairs, sinks and walls and floorings in the same colour, possibly also decorated, to eliminate the need for having to match different materials and thus obtaining perfect chromatic uniformity.

## Description

The present invention refers to a household appliance for kitchens and the like.

Household appliances such as ovens, refrigerators, dishwashers, washing machines, kitchen hoods and cooking hobs are known.

All appliances have external surfaces with surface finishes realised in different materials.

One disadvantage of current household appliances is that during their use, the coatings or surface finishes can become scratched, and subsequently this ruins the appearance of the appliance.

Another disadvantage is that in the case of fire, the finishes could catch on fire, and furthermore, in relation to this aspect, according to the type of material or coating, there is the additional danger that the finishes can generate toxic fumes when burnt.

Yet another disadvantage is the fact that, during cleaning, household appliance finishes can be attacked by disinfectants and detergents.

Yet another disadvantage is that with time, the finishes can become worn and also loose its colour properties.

Yet another disadvantage is that since these finishes are obtained using different materials, it is rather difficult to obtain colour uniformity since the same colour or shade must be matched using different materials.

The object of the present invention is to realise a household appliance for kitchens and the like that is resistant to wear and fire.

Another object is to realise a household appliance for kitchens and the like that is resistant to aggression by chemical agents.

Yet another object is to realise a household appliance for kitchens and the like that is completely compatible with food products.

Another object is to realise a household appliance for kitchens and the like that is able to guarantee perfect colour uniformity with other appliances or other elements adopted in the kitchen.

A further object is to realise a household appliance for kitchens and the like that is simple and economical.

These objects, according to the present invention, are achieved by realising a household appliance for kitchens and the like as described in claim 1.

Further characteristics of the invention are made clear in the following claims.

The characteristics and advantages of a supply system according to the present invention will be made clearer in the following description, provided as an example but not to be considered limiting in any manner, in reference to the appended schematic drawings wherein:
Figure 1 is a perspective view in front elevation of a first preferred embodiment of a household appliance according to the present invention;
Figure 2 is a perspective view in elevation from the left hand side of a second preferred embodiment of a household appliance according to the present invention;
Figure 3 is a perspective view from above of the side elevation of a cooking hob integrated with a kitchen bench top;
Figure 4 is a perspective view from above of the side elevation of a cooking hob fitted in a kitchen bench top;
Figure 5 is a perspective view from above, of the side elevation seen from the right hand side, of a kitchen unit.

According to a first aspect of the present invention, there is provided a household appliance 10 for kitchens and the like comprising a coating 12 at least partially in ceramic laminate, preferably in porcelain grès, as a surface finish.

Said coating 12 has a thickness that is preferably between 1 and 9 mm.

Said coating 12 can be used for a whole surface finish or limited to parts of the household appliance and therefore it can be used for at least a partial finish.

Said coating 12 is extremely hard, and therefore able to guarantee very strong resistance to wear, as well as very strong resistance to scratching and deep abrasion.

Said coating 12 is extremely resistant to fire and since it contains no organic substances, in the case of fire it does not generate toxic fumes and/or substances.

Said coating 12 in ceramic laminate is also resistant to disinfectants and detergents, as well as to chemical agents such as organic and inorganic solvents.

For this reason the surface can be washed and cleaned many times without altering the appearance.

Said coating 12 in ceramic laminate does not release any elements in solution, and furthermore, does not permit the forming of mould, bacteria and fungi, and therefore it is perfectly suitable for use with food products in general.

Said household appliance 10 is preferably an oven, a washing machine, a refrigerator, a dish-washer or a kitchen hood or cooking hob.

Said cooking hob can be either gas supplied or electric or induction type.

Moreover, said coating 12 is preferably screen-printed or decorated on the surface, or directly in the mix for appearance or functional purposes.

Said coating 12 can be preferably united with a glass element as for example in the case of a washing machine, an oven or a cooking hob.

Furthermore, said coating 12 can be preferably united with another ceramic laminate or with different materials.

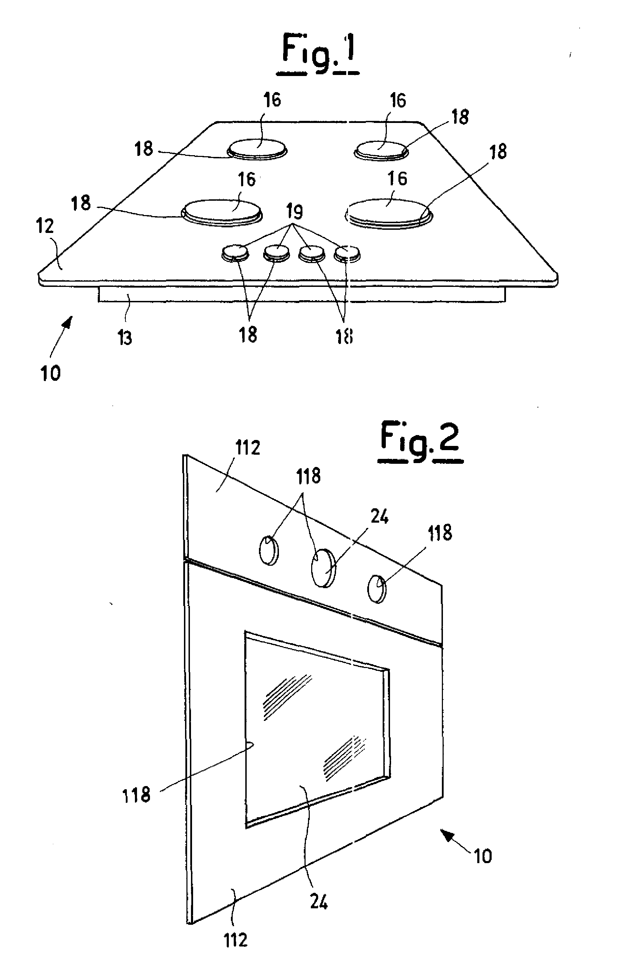

According to a preferred embodiment of the present invention, figure 1 shows a household appliance 10 such as a cooking hob, equipped with a drawer 13 and a coating 12 in ceramic laminate which allows to protect any possible support material positioned underneath the coating.

Said coating 12 in ceramic laminate also permits with extreme ease any change from gas or electric configuration, with a plurality of burners or heating plates 16 that protrude from the cooking hob, to an induction system having a flat continuous surface.

This is possible, in the case of gas or electric configuration, by simply cutting a plurality of through holes 18 in said coating 12 in ceramic laminate simply by means of a system commonly used for cutting glass because the characteristics of the ceramic laminate composition permit an analogous processing method.

Said plurality of holes 18 can also be used to house a plurality of control knobs 19 on said cooking hob as shown in figure 1.

Therefore said coating 12 preferably presents at least one through hole 18 having a shape and size suited to the specific use.

Said coating 12 can even more preferably present a plurality of through holes 18 to house a corresponding plurality of burners 16, or a corresponding plurality of electric plates 16.

Figure 2 illustrates one of the further possible practical embodiments of the invention, where the components that are equal and/or equivalent to those illustrated in figure 1 bear the same reference numerals increased by 100.

Figure 2 shows a household appliance 10 such as an oven, equipped with a plurality of coatings in ceramic laminate material 112 united with the respective glass panels 24 to realise the door and control knob panel of the oven itself.

As can be seen, in this case as well, each ceramic laminate coating 112 comprises at least one through hole 118.

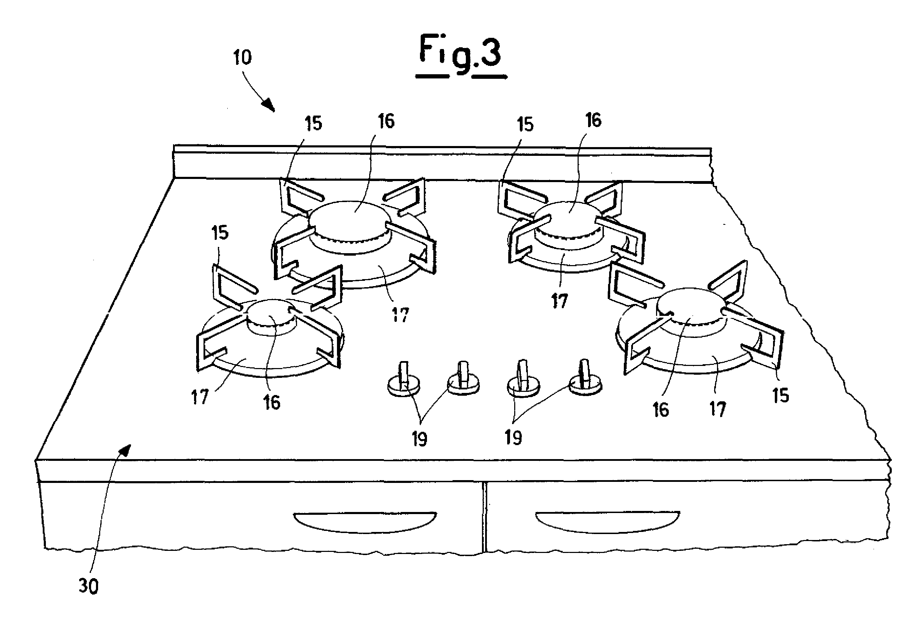

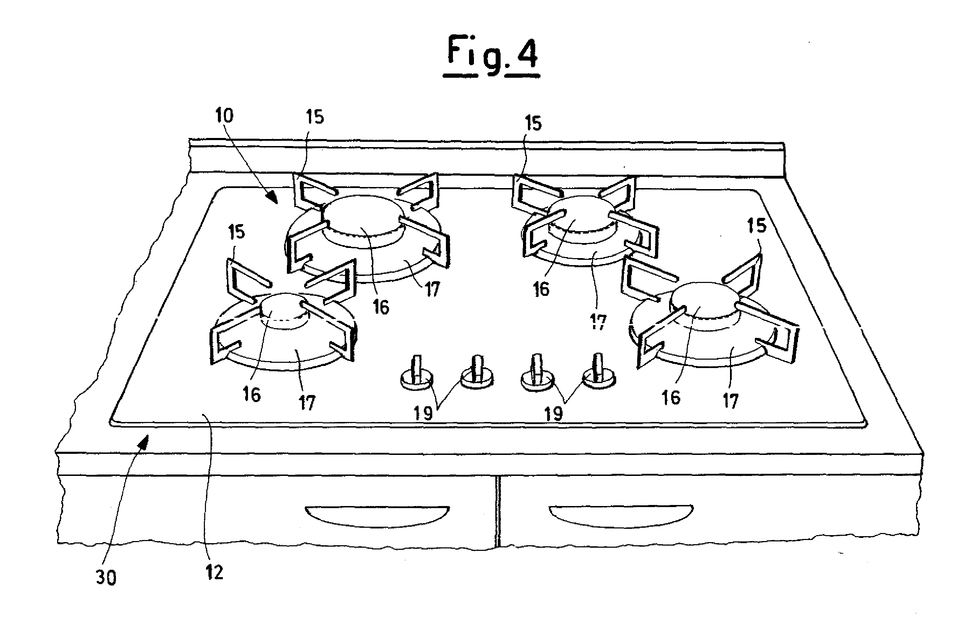

With reference to figures 3 and 4, the cooking hob 10 also presents a plurality of covering elements 17, each of which is intended to cover a corresponding hole of the plurality of holes 18, and also presents a plurality of support elements 15, each of which is arranged at a burner 16.

In figure 3, the cooking hob 10 is advantageously integrated in a kitchen bench top 30, which comprises a coating in ceramic laminate material.

In figure 4 the cooking hob 10 is fitted into a kitchen bench top 30 and is slightly raised in comparison with the same.

Moreover, the kitchen bench top 30 comprises a coating in a ceramic laminate material such as porcelain laminate grès.

It is therefore quite obvious that the use of a coating (12, 112) in ceramic laminate material as a surface finish on a household appliance 10 achieves the objects of the present invention and solves the problems of the known art.

In particular the use of a coating (12, 112) in porcelain laminate grès as a surface finish for a household appliance 10 also helps resolve singly and advantageously problems in known art, all at the same time.

Combined with this aspect, there is also the advantage of being able to design kitchens and/or parts of furniture such as unit doors, backs, bench tops and auxiliary equipment, tables, doors, chairs, sinks, and walls and floors in the same colour and possibly decorated, without the need for having to match different materials that often have different colours due to the fact that there was not a single material that could be coloured with characteristics and properties able to resolve at the same time the problems of known art, and also able to respect the specifications for a plurality of different applications.

Consequently, it is particularly simple and advantageous to achieve chromatic uniformity, both for single elements for a kitchen, as well as for the structural units and furnishing inside the kitchen.

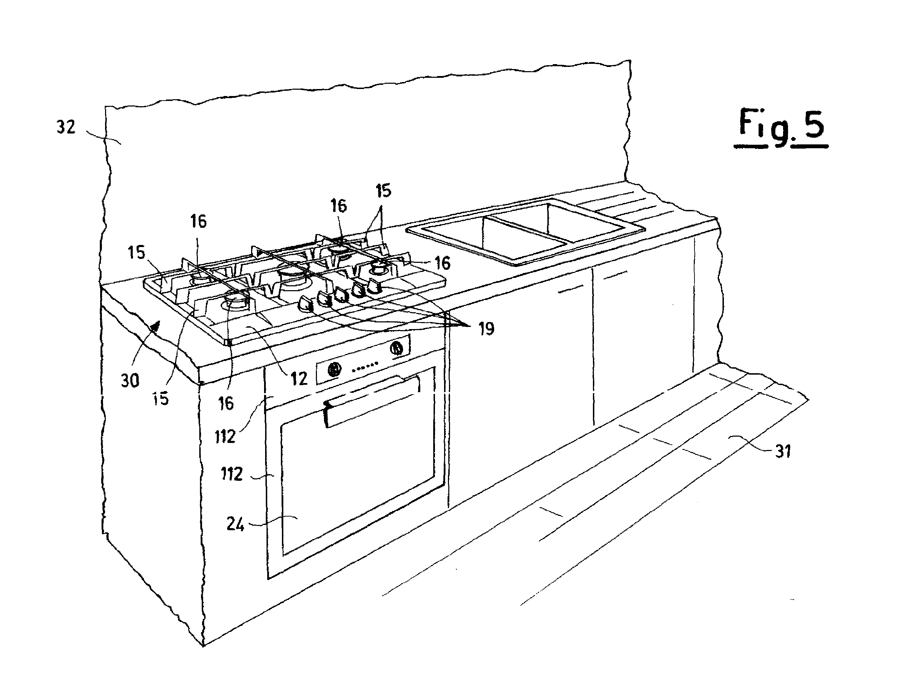

With reference to figure 5 a kitchen is shown, wherein there is a plurality of household appliances and wherein a coating in ceramic laminate material 12, 112, is used to coat elements such as oven and cooking hob, the flooring 31, and walls 32 of the kitchen, as well as unit doors, covering panels on refrigerator, dishwashers, and washing machines (not shown) and also a kitchen bench top 30, thus advantageously obtaining chromatic uniformity throughout the kitchen itself.

Furthermore in this particular embodiment, the kitchen bench top 30 and the relative coating in ceramic laminate are realised in a single piece and comprise the area adjacent to the cooking hob, the work space area for placing objects or cutting food, and an area adjacent to the sink.

Advantageously, by using a coating in ceramic laminate material it is possible to reduce household appliance production time and costs, because, since it is realised in sheet form, it can be suitably cut and applied using adhesives or other fixing means on the external surface of a household appliance 10.

Therefore it has been seen that a household appliance for kitchen and the like according to the present invention achieves the aims underlined previously.

The household appliance for kitchen and the like according to the present invention designed in this manner is susceptible of numerous modifications and variants, all included in same inventive concept.

Moreover, practically speaking, the materials employed, as well as their sizes and components can be of any type according to technical requirements.

## Claims

1. A household appliance (10) for kitchens and the like, **characterised in that** it comprises a coating (12,112) in ceramic laminate as at least a partial surface finish.

2. A household appliance (10) according to claim 1 **characterised in that** said coating (12,112) realised in ceramic laminate is made of porcelain grès.

3. A household appliance (10) according to claims 1 or 2 **characterised in that** said coating (12,112) has a thickness between 1 and 9 mm.

4. A household appliance (10) according to any of the previous claims from 1 to 3, **characterised in that** said coating (12,112) is coupled with a glass panel (24) or another ceramic laminate or another material.

5. A household appliance (10) according to any of the previous claims from 1 to 4, **characterised in that** said household appliance (10) is an oven.

6. A household appliance (10) according to any of the previous claims from 1 to 4, **characterised in that** said household appliance (10) is a washing machine.

7. A household appliance (10) according to any of the previous claims from 1 to 4, **characterised in that** said household appliance (10) is a refrigerator.

8. A household appliance (10) according to any of the previous claims from 1 to 4, **characterised in that** said household appliance (10) is a dishwasher.

9. A household appliance (10) according to any of the previous claims from 1 to 4, **characterised in that** said household appliance (10) is a kitchen hood.

10. A household appliance (10) according to any of the previous claims from 1 to 4, **characterised in that** said household appliance (10) is a cooking hob.

11. A household appliance (10) according to claim 10, **characterised in that** said coating (12,112) presents a plurality of through holes (18,118) to house a corresponding plurality of burners or electric plates (16).

12. A household appliance (10) according to claim 11, **characterised in that** said cooking hob is a gas burner type.

13. A household appliance (10) according to claim 11, **characterised in that** said cooking hob is an induction heater type.

14. A household appliance (10) according to claim 10 or 11, **characterised in that** said cooking hob is electric.

15. A household appliance (10) according to any of the previous claims from 1 to 14, **characterised in that** said coating is silk-screened or decorated.

16. A household appliance (10) according to any of the previous claims from 1 to 15, **characterised in that** said coating (12,112) presents at least one through hole (18,118).

17. Use of a coating in ceramic laminate material as a surface finish coating for a household appliance.

18. Use of a coating in ceramic laminate material as a surface finish coating for a kitchen.

19. Use of a coating in ceramic laminate material as a surface finish coating for any type of element used in a kitchen.

20. Use of a coating in porcelain laminate grès as a surface finish coating for any one of the claims from 17 to 19.

21. Use of a coating in porcelain laminate grès as a surface finish coating for flooring (31) and/or walls (32) in a kitchen.
